# EUROPÄISCHE PATENTSCHRIFT

(11) **EP 3 921 619 B1**
(45) Veröffentlichungstag und Bekanntmachung des Hinweises auf die Patenterteilung: **04.09.2024**
(21) Anmeldenummer: 20703153.5
(22) Anmeldetag: 23.01.2020
(51) Int. Cl.: G01N 1/28, G02B 21/32, G02B 21/26, G02B 21/36

(54) **VERFAHREN ZUR LASERMIKRODISSEKTION**
METHOD FOR LASER MICRODISSECTION
PROCÉDÉ DE MICRODISSECTION LASER

(30) Priorität: 05.02.2019 DE 102019102852
(43) Veröffentlichungstag der Anmeldung: 15.12.2021
(73) Patentinhaber: Leica Microsystems CMS GmbH, 35578 Wetzlar (DE)
(72) Erfinder: HOFFMANN, Florian, 35396 Giessen (DE); SCHLAUDRAFF, Falk, 35510 Butzbach (DE)
(74) Vertreter: Schaumburg und Partner Patentanwälte mbB
(86) Internationale Anmeldenummer: PCT/EP2020/051553
(87) Internationale Veröffentlichungsnummer: WO 2020/160913

(56) Entgegenhaltungen:
- EP-A2- 1 985 987
- DE-A1- 10 018 253
- DE-A1- 102015 108 017
- US-A1- 2011 194 749

## Beschreibung

Die vorliegende Erfindung betrifft ein Verfahren zur Lasermikrodissektion.

### Stand der Technik

Bei der Lasermikrodissektion handelt es sich um ein leistungsfähiges und zerstörungsfreies Verfahren zur Gewinnung von Einzelzellen oder Zellbereichen aus spezifischen Bereichen mikroskopischer Proben, die anschließend einer Vielzahl von Untersuchungstechniken unterworfen werden können. Für eine Übersicht sei auf einschlägige Lehrbücher verwiesen, beispielsweise das Kapitel "Laser Microdissection" bei John D. Bancroft und Marilyn Gamble (Hrsg.), Theory and Practice of Histological Techniques, Churchill Livingstone/Elsevier, 2008, Seite 575.

Die DE 10 2015 108 017 A1 offenbart ein Verfahren zur Untersuchung und Bearbeitung einer mikroskopischen Probe mit einer Abbildungsvorrichtung und einem Lasermikrodissektionssystem. Dabei erfolgt ein Erzeugen von wenigstens zwei Referenzmarkierungen auf einem Objektträger mit dem Lasermikrodissektionssystem, ein Aufbringen der Probe auf denselben Objektträge, ein Erzeugen eines digitalen Abbilds der Probe auf dem Objektträger mit der Abbildungsvorrichtung, wobei das Abbild auch die Referenzmarkierungen umfasst, ein Festlegen wenigstens eines Bildbereichs des Abbilds und ein Erzeugen von ersten Lageinformationsdaten, die die Lage des wenigstens einen Bildbereichs in dem Abbild angeben. Ferner erfolgt ein Identifizieren der Referenzmarkierungen in dem Abbild und ein Erzeugen von zweiten Lageinformationsdaten, die die Lage der Referenzmarkierungen in dem Abbild angeben. Nach einem Bereitstellen der ersten und zweiten Lageinformationsdaten an das Lasermikrodissektionssystem erfolgt dort ein Abbilden des Objektträgers mit der Probe und den Referenzmarkierungen. ein Identifizieren der Referenzmarkierungen und ein Erzeugen von dritten Lageinformationsdaten, die die Lage der Referenzmarkierungen in dem Lasermikrodissektionssystem angeben. Die ersten, zweiten und dritten Lageinformationsdaten werden korreliert und wenigstens ein entsprechender Probenbereich wird mit dem Lasermikrodissektionssystem bearbeitet.

Aus der EP 1 985 987 A1 ist eine Vorrichtung und ein Verfahren zur LaserMikrodissektion, wobei zur Einstellung eines Laserparameters einer Laserlichtquelle eine Probe-Schnittlinie mit dem Laserstrahl erzeugt und ein Bild von der Probe-Schnittlinie aufgenommen wird. Dieses Bild wird mit einer Referenz-Schnittlinie verglichen, um abhängig von dem Vergleichsergebnis entweder den Wert des Laserparameters zu verändern oder einen Laser-Mikrodissektionsvorgang mit dem eingestellten Wert des Laserparameters durchzuführen.

Bei der Lasermikrodissektion bleiben die Zell- und Gewebemorphologie und zugleich die Makromoleküle in der Zelle weitestgehend erhalten. An den gewonnenen Zellen ist daher die Untersuchung der jeweiligen Erbinformation und von Proteinen durch entsprechende Verfahren möglich. Mittels Lasermikrodissektion können unterschiedliche mikroskopische Proben bearbeitet werden, beispielsweise Gefrierproben, in Paraffin oder Kunststoff eingebettete Gewebeschnitte, Ausstriche von Blut und anderen Körperflüssigkeiten und Zellkulturen. Neben solchen biologischen Proben können durch die Lasermikrodissektion unter Umständen auch künstliche Materialen oder Kunststoffe, Glas sowie Dünnschliffe von Metallen oder Mineralien bzw. Gesteinsproben bearbeitet werden.

Gewebeschnitte und andere Proben können für den Einsatz in der Lasermikrodissektion mittels bekannter Färbetechniken, beispielsweise mit Hämatoxylin/Eosin, gefärbt oder anderweitig markiert sein oder in ungefärbtem Zustand eingesetzt werden. Insbesondere können immunhistochemische Färbetechniken zusammen mit Fluorochromen oder Chromagenen verwendet werden, oder es kann eine Fluoreszenz-in-situ-Hybridisierung (FISH) erfolgen. Die jeweils verwendeten Färbe- bzw. Markierungstechniken richten sich insbesondere auch nach der Art der nachfolgend durchzuführenden Untersuchungen.

Die Begriffe "Probe", "Objekt", "Untersuchungsobjekt" und dergleichen werden nachfolgend synonym verwendet und können jede Art der vorstehend erläuterten, gefärbten bzw. markierten oder ungefärbten bzw. unmarkierten Proben bezeichnen. Insbesondere sind entsprechende Untersuchungsobjekte zur Verwendung in der Lasermikrodissektion grundsätzlich bekannter Weise auf einem Objektträger fixiert bzw. immobilisiert und ggf. mittels einer Membran überdeckt.

Der allgemeine Begriff "Lasermikrodissektion" wird für eine Vielzahl unterschiedlicher Verfahrensvarianten verwendet, die in der Fachwelt üblicherweise mit englischen Fachtermini bezeichnet werden. Entsprechende Verfahrensvarianten sind vielfach in der Fachliteratur beschrieben und werden nachfolgend lediglich kurz zusammengefasst. Die vorliegende Erfindung kann grundsätzlich im Zusammenhang mit sämtlichen Verfahrensvarianten verwendet werden.

In allen Fällen wird bei der Lasermikrodissektion die Positionierung des zur Bearbeitung verwendeten Laserstrahls durch eine Relativbewegung zwischen dem Laserstrahl und dem Untersuchungsobjekt vorgenommen. Diese Relativbewegung kann in bestimmten Ausgestaltungen durch eine horizontale Bewegung des Probentischs erzielt werden. In einer besonders vorteilhaften alternativen Ausgestaltung, die beispielsweise in der DE 100 18 253 C2 erstmals beschrieben ist, wird der Mikroskoptisch während des Schneidens bzw. zur (Fein-)Positionierung des Laserstrahls hingegen feststehend angeordnet. In einer Auflichteinrichtung des verwendeten Mikroskops, durch die der Laserstrahl über das Mikroskopobjektiv auf das Untersuchungsobjekt eingestrahlt wird, ist in dieser Ausgestaltung eine Laserscaneinrichtung angeordnet, die hier aus zwei dicken, gegen die optische Achse geneigten und unabhängig voneinander um die optische Achse drehbaren transparenten Keilplatten besteht.

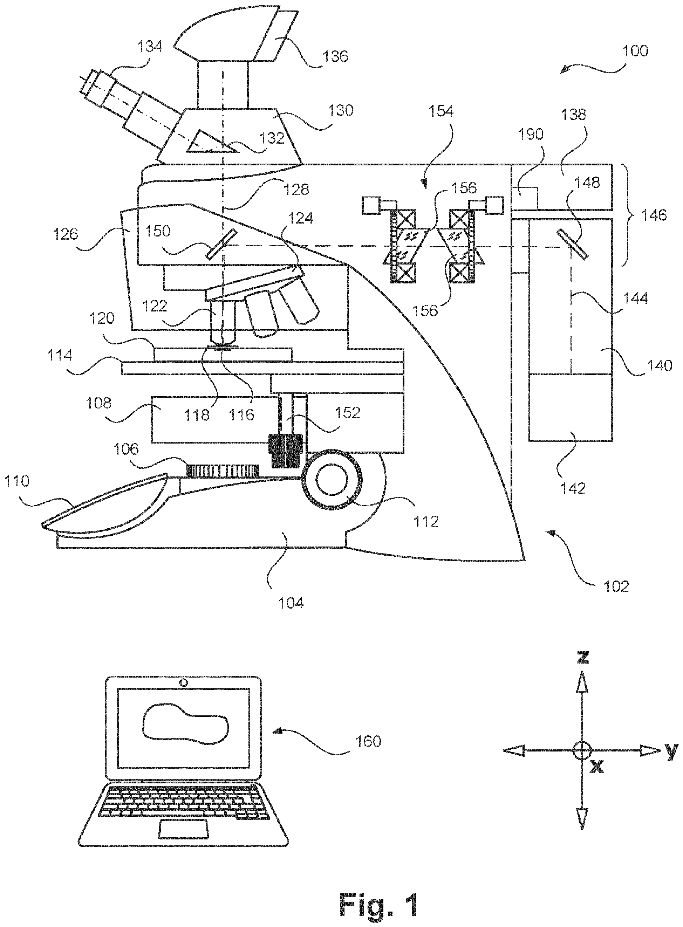

Die Keilplatten werden vorzugsweise über Schrittmotoren angesteuert, die eine relative Verdrehung der Keilplatten zueinander bewirken. Der Laserstrahl wird durch die Keilplatten geführt, wodurch er gegenüber der optischen Achse um einen Ablenkwinkel abgelenkt wird. Durch die Verdrehung der Keilplatten um die optische Achse kann der Ablenkwinkel eingestellt und variiert werden, wobei die Anordnung aber derart vorgenommen wird, dass der Laserstrahl aber insbesondere stets durch das Zentrum der hinteren Objektivpupille tritt. Dies wird insbesondere durch eine geeignete Wahl der Dicke und der Schrägstellung der Keilplatten erzielt. Ein entsprechendes Lasermikrodissektionssystem wird auch unter Bezugnahme auf die beigefügte Figur 1 noch erläutert.

In der soeben erläuterten Ausgestaltung kann der Laserstrahl auf beliebige Punkte in der Ebene des Untersuchungsobjekts gerichtet werden. Hierzu wird der maximale Ablenkwinkel derart bemessen, dass der Laserstrahl nur bis zum Sehfeldrand abgelenkt wird. Dies gilt gleichzeitig für alle Objektive unabhängig von deren Vergrößerung. Durch die Verwendung einer entsprechenden Laserscaneinrichtung in der soeben erläuterten besonders vorteilhaften Ausgestaltung kann auf einen aufwendigen motorisierten Probentisch verzichtet werden. Da der Probentisch während des Schneidvorgangs feststeht, kann der Benutzer den Schneidvorgang im Präparat beobachten und kontrollieren.

Die zuvor bereits angesprochenen unterschiedlichen Verfahrensvarianten unterscheiden sich insbesondere in der Art, in der zu untersuchende Bereiche aus dem Verband des Untersuchungsobjekts gelöst und in geeignete Auffanggefäße oder auf geeignete Träger überführt werden.

In einer Verfahrensvariante wird der Laserstrahl, insbesondere in Form einer Schnittlinie, um den zu untersuchenden Bereich geführt und hierdurch herausgetrennt. Das Untersuchungsobjekt ist in diesem Fall insbesondere an der Unterseite eines beschichteten oder mittels einer Membran bedeckten Objektträgers angeordnet. Durch die Einwirkung des Laserstrahls erfolgt eine Durchtrennung des Untersuchungsobjekts bzw. einer mit diesem verbundenen Membran, und der auf diese Weise herausgetrennte Bereich kann durch Schwerkraftwirkung in ein unterhalb des Untersuchungsobjekts angeordnetes Auffanggefäß fallen. Zur Bearbeitung kann auch beispielsweise eine Schnittlinie mittels eines fein fokussierten Laserstrahls bis auf einen oder mehrere verbleibende Stege geschlossen werden. Durch eine nachfolgende Umfokussierung kann der Laserstrahl aufgeweitet und auf den oder die verbleibenden Stege gerichtet werden. Auf diese Weise lassen sich beispielsweise Verdrehungen und eine spannungsbedingte Ablenkung beim Herausfallen verhindern.

Beim sogenannten Laser Pressure Catapulting (LPC) erfolgt dagegen ein Katapultieren der ausgeschnittenen Probe, insbesondere durch gezieltes Richten eines geeigneten Laserpulses auf einen zuvor erläuterten Reststeg einer Schnittlinie oder eine herauszutrennende Zelle. Für die Katapultwirkung werden unterschiedliche physikalische Phänomene verantwortlich gemacht. Die entsprechend katapultierten Zellen können beispielsweise in einem Probengefäß aufgefangen oder an eine mit einer Haftschicht versehene Membran angeheftet werden.

Bei der sogenannten Laser Capture Microdissection (LCM) werden Zellen durch die Einwirkung des Laserstrahls noch auf dem Träger an eine Membran angeheftet. Durch ein Anheben bzw. Abziehen der Membran können die Zielbereiche aus dem Verband gerissen werden, wobei diese an die Membran angeheftet bleiben. Die auf diese Weise abgelösten Zielbereiche können dann zusammen mit der Membran in ein Untersuchungsgefäß überführt werden.

Bei einer weiteren Variante können beispielsweise lebende Zellen in einer sterilen Kulturschale oder einem entsprechenden Objektträger mit einer lichtabsorbierenden Membran abgedeckt werden. Mittels des Laserstrahls kann um Zellen von Interesse unterhalb der Membran herum geschnitten werden. Wird die Membran entfernt, bleiben die Zellen in der Kulturschale bzw. auf dem Objektträger und unerwünschte Zellen können zusammen mit der Folie abgelöst werden. Diese Verfahrensvariante wird auch als Zellablation bezeichnet.

Meist wird zur Lasermikrodissektion Laserlicht im ultravioletten Wellenlängenbereich verwendet, wobei der verwendete Laserstrahl zumeist gepulst wird. Durch eine Fokussierung des Laserstrahls wird eine hohe Energiedichte bei gleichzeitiger enger lokaler Begrenzung des eingestrahlten Laserlichts erzielt. Hohe Pulsfrequenzen können beispielsweise für ein schnelles Schneiden bzw. Anheften sowie zum Erzeugen von feinen Schnittlinien verwendet werden.

In allen erläuterten Fällen ist eine Fokuskontrolle des verwendeten Laserstrahls von großer Bedeutung. Wird beispielsweise die Breite des Laserstrahls aufgrund einer mangelhaften Fokussierung zu groß eingestellt, wird lokal weniger Energie auf das Untersuchungsobjekt eingestrahlt, da sich diese Energie auf eine größere Fläche verteilt. Daher kann es beispielsweise zu einer unzureichenden Durchtrennung des Untersuchungsobjekts oder einer nicht ausreichend festen Anheftung an eine verwendete Membran kommen.

Zwar kann im Gegenzug hierzu die Laserleistung erhöht oder ein entsprechender Bereich länger oder wiederholt mit dem Laserstrahl bestrahlt werden. Derartige Maßnahmen gehen jedoch typischerweise auf Kosten der Probenqualität, beispielsweise durch eine thermische Schädigung des Untersuchungsobjekts, und führen ggf. zu einer längeren Experimentdauer. Durch eine Aufweitung des Laserstrahls kommt es zudem zu einer Verringerung der Spezifität bzw. lokalen Auflösung bei der Probenbearbeitung und damit ggf. zu falschen Ergebnissen.

Die Fokussierung des Laserstrahls wird dadurch erschwert, dass ein Untersuchungsobjekt in den seltensten Fällen genau horizontal bzw. in einer exakt reproduzierbaren Lage zur optischen Achse des Lasermikrodissektionssystems ausgerichtet werden kann. Häufig erfolgt die Definition von Bearbeitungspunkten oder Bearbeitungslinien bei der Lasermikrodissektion in separaten optischen Geräten, beispielsweise anhand von digitalen Bildern, die von einem Objektträger mit dem darauf angeordneten Untersuchungsobjekt aufgenommen wurden, insbesondere in sogenannten Slidescannern. Ein Slidescanner dient dazu, eine Vielzahl geträgerter Untersuchungsobjekte zu erfassen, um eine Diagnose anhand der erfassten digitalen Daten und eine entsprechende Markierung vornehmen zu können. Die Verwendung separater optischer Geräte hat den Vorteil, dass das eigentliche Lasermikrodissektionssystem ausschließlich zur Gewinnung von Material genutzt werden kann, wohingegen die zeitaufwendige Definition von Bearbeitungspunkten oder Bearbeitungslinien parallel in dem separaten optischen Gerät, oder mehreren solcher Geräte, vorgenommen werden kann.

Zwar ist bei einem entsprechenden Vorgehen die Lage des jeweiligen Zielpunkts in einer Richtung parallel zur optischen Achse des Lasermikrodissektionssystems, d.h. in der sogenannten z-Richtung, aufgrund der bekannten mechanischen und optischen Gegebenheiten grundsätzlich bekannt. Durch eine unvermeidliche leichte Verkantung des Objektträgers bei der Einbringung in das Lasermikrodissektionssystem verändert sich diese jedoch geringfügig, so dass ein ggf. vordefinierter Fokusabstand von dem realen Fokusabstand abweicht und damit ohne eine entsprechende Nachfokussierung die Breite des einwirkenden Laserstrahls mit den zuvor erläuterten Nachteilen unerwünscht vergrößert sein kann. Es ist zwar möglich, eine Nachfokussierung bzw. Autofokussierung vorzunehmen; dies führt aber zwangsläufig zu deutlichen Verzögerungen bei der Bearbeitung und ggf. zusätzlichem Aufwand.

Die vorliegende Erfindung stellt sich vor diesem Hintergrund die Aufgabe, verbesserte Möglichkeiten zur Fokussierung des Laserstrahls in einem Lasermikrodissektionssystem auch in den zuvor erläuterten Fällen sicherzustellen.

### Zusammenfassung der Offenbarung

Vor diesem Hintergrund schlägt die vorliegende Erfindung ein Verfahren zur Lasermikrodissektion mit den Merkmalen des Hauptanspruchs vor. Ausgestaltungen sind jeweils Gegenstand der abhängigen Patentansprüche sowie der nachfolgenden Beschreibung.

In dem erfindungsgemäß vorgeschlagenen Verfahren zur Lasermikrodissektion wird, wie grundsätzlich auch in Verfahren gemäß dem Stand der Technik der Fall, ein mikroskopisches Untersuchungsobjekt unter Verwendung von Tupeln von Koordinatenwerten, die jeweils Positionen von Zielpunkten auf dem Untersuchungsobjekt zumindest in einer ersten Raumrichtung und einer zu der ersten Raumrichtung orthogonalen zweiten Raumrichtung angeben, mittels eines Laserstrahls bearbeitet. Die Tupel von Koordinatenwerte können insbesondere als Koordinatenpaare vorliegen, d.h. Paare von Ordinaten- und Abszissenwerten in einem kartesischen Koordinatensystem. Entsprechende Tupel von Koordinatenwerte können jedoch auch als Koordinatentripel vorliegen, bei denen den Ordinaten- und Abszissenwerten jeweils ein Applikatenwert im Koordinatensystem zugeordnet ist.

Im hier verwendeten Sprachgebrauch sollen die Begriffe Abszissenwert (x-Wert) und Ordinatenwert (y-Wert) bzw. entsprechende Richtungen jeweils Koordinatenwerte bzw. Richtungen bezeichnen, die über entsprechende, in einer Ebene liegende und senkrecht aufeinander stehende Achsen definiert sind. Diese Achsen (Abszisse und Ordinate, x-Achse und y-Achse) stehen dabei senkrecht zu einer Objektivachse eines Lasermikrodissektionssystems bzw. von dessen Mikroskop, das im Rahmen der vorliegenden Erfindung eingesetzt wird. Die Abszisse und die Ordinate entsprechen ferner den horizontalen Bewegungsrichtungen, in der ein Mikroskoptisch motorisch oder manuell bewegt werden kann, um unterschiedliche Bereiche einer zu untersuchenden Probe in das Blickfeld des Mikroskops zu bringen und dadurch beobachten bzw. mittels eines Laserstrahls bearbeiten zu können. Durch eine Verstellung in Abszissen- und Ordinatenrichtung kann jeder beliebige Probenbereich ins Gesichtsfeld gebracht werden, soweit ein Verstellumfang dies zulässt.

Wie erwähnt, wird in der Lasermikrodissektion zur Erzielung einer Relativbewegung zwischen dem zur Bearbeitung des Untersuchungsobjekts verwendeten Laserstrahl und dem Untersuchungsobjekt entweder der Probentisch in einer entsprechenden Ebene bewegt, oder es erfolgt eine Ablenkung des Laserstrahls unter Verwendung einer Laserscaneinrichtung. Die vorliegende Erfindung eignet sich für beide Fälle.

Hingegen soll der Begriff Applikatenwert (z-Wert) bzw. eine entsprechende Richtung einen Koordinatenwert bzw. eine Richtung bezeichnen, der bzw. die über eine zur Abszisse und zur Ordinate senkrecht stehende Achse (Applikate, z-Achse) definiert ist. Diese Achse entspricht ferner der vertikalen Bewegungsrichtung, in der ein Mikroskoptisch motorisch oder manuell relativ zu einem Mikroskop entlang der Richtung der Objektivachse bewegt werden kann, insbesondere um eine Fokussierung der zu untersuchenden Probe bzw. von Komponenten dieser Probe, insbesondere in unterschiedlichen Tiefen, in dem Blickfeld des Mikroskops vorzunehmen und dadurch beobachten bzw. mittels des Laserstrahls bearbeiten zu können.

Die Tupel von Koordinatenwerten können im Rahmen der vorliegenden Erfindung insbesondere, wie auch unten noch im Detail erläutert, zu Tupelgruppen zusammengefasst sein, die eine Schnittlinie definieren. Es ist jedoch auch möglich, einzelne Tupel von Koordinatenwerten zu verwenden, beispielsweise um Einzelzellen oder bestimmte Objektbereiche mittels eines einzelnen Laserstrahlimpulses ("Schuss") aus der Probe zu lösen und beispielsweise in ein entsprechendes Aufnahmegefäß zu überführen ("herauszuschießen"), oder um eine entsprechende Zelle oder einen entsprechenden Probenbereich lokal an eine zuvor erläuterte Transfermembran anzuheften. Zu diesem Zweck, d.h. zur lokalen Bearbeitung eines Probenbereichs, können entsprechende Tupel von Koordinatenwerten aber auch zu Tupelgruppen zusammengefasst werden, die jedoch keine Schnittlinie sondern einen Cluster von Zielpunkten bilden, beispielsweise um bestimmte Objektbereiche gezielt zu zerstören oder durch eine vergrößerte Haftfläche fester an eine Membran anzuheften.

Es kann im Rahmen der vorliegenden Erfindung aber auch vorgesehen sein, beispielsweise ein Tupel von Koordinatenwerten oder eine Gruppe entsprechender Tupel im soeben erläuterten Sinn zu verwenden, anhand dessen erst eine Schnittlinie, ein Schnittlinienversatz oder dergleichen bestimmt wird. Die Tupel von Koordinatenwerten dienen in diesem Fall also lediglich als Vorgabe- bzw. Ausgangspunkte, anhand derer dann die eigentlichen Bearbeitungspunkte bzw. Bearbeitungslinien festgelegt werden. Beispielsweise kann in einem entsprechenden Verfahren durch ein entsprechendes Tupel der Mittelpunkt einer zu bearbeitenden Zelle bzw. eines zu bearbeitenden Probenbereichs oder ein anderer Ankerpunkt markiert werden, aufgrund dessen, bei Kenntnis oder näherungsweiser Kenntnis der Größe der Zelle bzw. des zu bearbeitenden Bereichs, dann eine Bearbeitungslinie oder Schnittlinie, beispielsweise kreisförmig oder in anderer geeigneter Form, um den Mittelpunkt bzw. Ankerpunkt gelegt werden kann.

Den im Rahmen der vorliegenden Erfindung verwendeten Tupeln von Koordinatenwerten können insbesondere neben den Abszissen- und Ordinatenwerten auch Vorgabewerte in Richtung der Applikate zugeordnet sein, die eine Zielposition in dieser Richtung angeben. Weitere Details werden unten erläutert. Den im Rahmen der vorliegenden Erfindung verwendeten Tupeln von Koordinatenwerten können jedoch auch andere zur Bearbeitung der Probe eingesetzte Parameterwerte zugeordnet werden. Beispielsweise können den einzelnen Zielpunkten auf einer Schnittlinie unterschiedliche Vorgabewerte für die verwendete Laserleistung zugeordnet werden. Dies kann beispielsweise deshalb erfolgen, um in robusteren Bereichen eine vollständige Durchtrennung des Untersuchungsobjekts sicherzustellen und in sensibleren Bereichen eine Schädigung des Untersuchungsobjekts zu vermeiden. In Fällen, in denen ein Probenbereich aus einem entsprechenden Untersuchungsobjekt mittels einer Schnittlinie herausgetrennt wird, bei der zunächst ein oder mehrere Stege verbleiben, kann einem Tupel von Koordinatenwerten auch beispielsweise zur Durchtrennung eines entsprechenden Stegs ein Vorgabewert zugeordnet werden, aufgrund dessen der Laserstrahl durch gezielte Defokussierung aufgeweitet und auf diese Weise der Steg durchtrennt werden kann.

Wie einleitend erläutert, kann es insbesondere dann, wenn zur Vorgabe von Bearbeitungspunkten bzw. Bearbeitungslinien separate optische Geräte verwendet werden, zu Ungenauigkeiten bei der Positionierung des Untersuchungsobjekts bzw. des das Untersuchungsobjekt tragenden Objektträgers in einer Richtung parallel zur optischen Achse des Mikroskopobjektivs kommen. Hierdurch ist, wie ebenfalls erwähnt, eine exakte Fokusvorgabe in dem Verfahren gemäß dem Stand der Technik typischerweise nicht möglich.

Die vorliegende Erfindung überwindet diesen Nachteil der aus dem Stand der Technik bekannten Verfahren nun dadurch, dass Positionen wenigstens dreier Referenzpunkte jeweils in der ersten und der zweiten Raumrichtung sowie in einer zu der ersten und der zweiten Raumrichtung orthogonalen dritten Raumrichtung vorab ermittelt werden. Die erste und die zweite Raumrichtung entsprechen dabei insbesondere der Abszissen- und der Ordinatenrichtung. Die dritte Raumrichtung ist hingegen die bereits zuvor beschriebene Applikatenrichtung.

Die vorliegende Erfindung sieht ferner vor, dass auf Grundlage der Positionen der Referenzpunkte eine Referenzebene festgelegt wird. Wie angegeben, können im Rahmen der vorliegenden Erfindung anstelle von genau drei Referenzpunkten auch mehr als drei Referenzpunkte verwendet werden. Durch geeignete Matchingverfahren können dabei die Referenzpunkte bestimmt werden, die eine plausible oder mit möglichst geringen Abweichungen behaftete Definition einer entsprechenden Ebene zulassen. Beispielsweise aufgrund von Messungenauigkeiten mit Fehlern behaftete Referenzpunkte ("Ausreißer") können jeweils bei der Definition der Ebene ausgeschlossen werden.

Im Rahmen der vorliegenden Erfindung erfolgt die Definition über wenigstens drei Referenzpunkte, da durch drei Referenzpunkte eine eindeutige Ebenendefinition ermöglicht wird. Wie erläutert, kann in dem entsprechenden Verfahren gemäß dem Stand der Technik insbesondere auch eine leichte Schrägstellung eines das Untersuchungsobjekt tragenden Objektträgers vorliegen, so dass eine reine Abstandsdefinition, beispielsweise über eine Messung bis zu einem beliebigen Punkt auf dem Untersuchungsobjekt, für eine eindeutige bzw. präzise Definition von Fokuspunkten an unterschiedlichen Positionen des Untersuchungsobjekts nicht möglich ist. Durch die Verwendung einer entsprechenden, auch ggf. gegenüber der optischen Achse schiefgestellten Ebene, kann im Rahmen der vorliegenden Erfindung für jeden Bereich des Untersuchungsobjekts hingegen ein Fokuspunkt zumindest vordefiniert werden, wobei eine ggf. vorhandene Schrägstellung des Untersuchungsobjekts bzw. deren Trägers kompensiert werden kann.

Aufgrund einer entsprechend definierten Referenzebene können im Rahmen der vorliegenden Erfindung Koordinatenwerte für die jeweiligen Zielpunkte auf dem Untersuchungsobjekt ermittelt werden. Dies erfolgt insbesondere dadurch, dass für die Zielpunkte jeweils weitere Koordinatenwerte bestimmt werden, die eine erwartete Lage der Zielpunkte auf dem Untersuchungsobjekt in der dritten Raumrichtung angeben, wobei die Bestimmung der weiteren Koordinatenwerte in Abhängigkeit von der festgelegten Referenzebene vorgenommen wird. Details zu einer entsprechenden Festlegung werden nachfolgend erläutert.

Die vorliegende Erfindung macht sich zu Nutze, dass das Untersuchungsobjekt auf einem entsprechenden Objektträger typischerweise parallel angeordnet ist und daher eine bezüglich des Objektträgers definierte Schrägstellung, wie sie aufgrund der zuvor ermittelten Ebene anhand der Referenzpunkte ermittelt wird, auch für das Untersuchungsobjekt zu beobachten ist.

Im Rahmen der vorliegenden Erfindung wird schließlich eine Fokuslage des Laserstrahls zur Bearbeitung des Untersuchungsobjekts in Abhängigkeit von den bestimmten weiteren Koordinaten eingestellt. Hierdurch kann eine Fokuslage des Laserstrahls jeweils auf Grundlage der jeweils ermittelten Koordinatenwerte in der dritten Raumrichtung, d.h. der Applikatenrichtung, vorgenommen werden.

Wie bereits erwähnt, macht sich die vorliegende Erfindung zu Nutze, dass die Referenzebene zumindest teilweise einer Ebene entspricht, in der eine Oberfläche des Untersuchungsobjekts angeordnet ist. Dies ist daher in Ausgestaltungen der Erfindung der Fall. Die Einstellung der Fokuslage des Laserstrahls zur Bearbeitung des Untersuchungsobjekts in Abhängigkeit von den bestimmten weiteren Koordinatenwerten, wie sie erfindungsgemäß vorgenommen wird, muss dabei nicht umfassen, einen Fokuspunkt bzw. die Fokuslage des Laserstrahls exakt auf die anhand der Referenzpunkte ermittelte Referenzebene einzustellen. Insbesondere kann in diesem Zusammenhang auch ein ggf. vorliegender (und bekannter) Versatz der Oberfläche des Untersuchungsobjekts gegenüber der zuvor ermittelten Referenzebene berücksichtigt werden, beispielsweise wenn die Referenzpunkte auf dem Objektträger selbst ermittelt werden und wenn die Probe eine bekannte Dicke aufweist und daher die Oberfläche der Probe einen gewissen Abstand zu dieser Referenzebene aufweist. Die Einstellung der Fokuslage muss dabei auch nicht eine präzise Fokussierung des Laserstrahls auf die Oberfläche des Untersuchungsobjekts umfassen. Vielmehr kann bei Bedarf auch eine Fokusposition leicht oberhalb oder unterhalb (jedoch aufgrund der erfindungsgemäß vorgeschlagenen Maßnahmen in einer reproduzierbaren Position) eingestellt werden.

Durch die Verwendung der Referenzebene ist eine besonders einfache Ermittlung der Koordinatenwerte in der dritten Raumrichtung möglich, und zwar insbesondere dadurch, dass eine Projektion der zuvor in der ersten und zweiten Raumrichtung definierten Koordinatenwerte auf eine entsprechende Ebene vorgenommen wird. Mit anderen Worten kann im Rahmen der vorliegenden Erfindung die Bestimmung der weiteren Koordinaten in Abhängigkeit von der festgelegten Referenzebene insbesondere jeweils umfassen, eine Lage der festgelegten Referenzebene in der dritten Raumrichtung an einer Position zu bestimmen, die für die jeweiligen Zielpunkte durch das zugehörige Tupel von Koordinatenwerten in der ersten und zweiten Raumrichtung angegeben wird. Mit anderen Worten umfasst ein entsprechendes Tupel von Koordinatenwerten jeweils die x- und y-Richtung, und die z-Richtung wird durch eine entsprechende geometrische Projektion auf die Referenzebene definiert. Aufgrund des erläuterten Vorgehens wird die horizontale Lage, die durch die Koordinatenwerte in der ersten und der zweiten Raumrichtung vorgegeben wird, nicht beeinflusst.

Im Rahmen der vorliegenden Erfindung kann insbesondere ein Autofokussystem verwendet werden, das zunächst auf einen Voreinstellwert voreingestellt wird, und das anschließend auf Grundlage von Merkmalen des Untersuchungsobjekts eine Autofokusroutine durchführt. Der Voreinstellwert kann insbesondere in Abhängigkeit von einer Lage der Referenzebene in der dritten Raumrichtung vorgegeben werden. Dies bedeutet, mit anderen Worten, dass ein entsprechendes Autofokussystem im Rahmen der vorliegenden Erfindung auf Grundlage der wie zuvor beschriebenen Werte voreingestellt werden kann, und daher lediglich einen ggf. verbleibenden Restfehler ausgleichen muss. Dieser verbleibende Restfehler, der den Umfang definiert, in dem das Autofokussystem verstellt werden muss, liegt jedenfalls deutlich unterhalb des Verstellbereichs, in dem ein entsprechendes Autofokussystem verstellt werden muss, wenn keine entsprechende Vorgabe erfolgt. Ein entsprechendes Autofokussystem kann die reale Objektoberfläche daher sehr viel rascher scharf stellen, als dies ohne die Verwendung eines entsprechenden Vorgabewertes der Fall wäre. Hierdurch beschleunigt sich das Verfahren beträchtlich und mögliche Fehler, die das Autofokussystem beeinflussen können, können eliminiert werden.

Mit nochmals anderen Worten wird im Rahmen der vorliegenden Erfindung in Verbindung mit einem derartigen Autofokussystem zunächst eine Lage der jeweiligen Zielpunkte in der dritten Raumrichtung auf Grundlage der Referenzebene abgeschätzt und ein entsprechender Schätzwert zur Ansteuerung eines Autofokussystems verwendet. Das Autofokussystem stellt dann auf die an dem jeweiligen Zielpunkt tatsächlich vorliegende Probenoberfläche scharf, die aufgrund von geringfügigen Unebenheiten der Probe auf von der Zielebene bzw. Referenzebene oder einem auf Grundlage der Referenzebene bestimmten Wert abweichen kann.

Im Rahmen der vorliegenden Erfindung können grundsätzlich Referenzpunkte verwendet werden, die innerhalb oder außerhalb eines Bereichs liegen, in dem sich das Untersuchungsobjekt befindet. Vorteilhafterweise befinden sich entsprechende Referenzpunkte, sofern sie außerhalb des Bereichs liegen, in dem sich das Untersuchungsobjekt befindet, jedoch auf einem Objektträger, der in diesem Fall als Bezugsebene verwendet wird. Als Referenzpunkte innerhalb des Bereichs des Untersuchungsobjekts können beispielsweise markante Probenpunkte und/oder mittels geeigneter Verfahren in die Probe eingebrachte Markierungen verwendet werden. Entsprechende Referenzpunkte können erkannt und in der zuvor erläuterten Weise zur Definition der Referenzebene verwendet werden.

Als Referenzpunkte können auch Markierungen auf einem Objektträger verwendet werden, auf dem sich das Untersuchungsobjekt befindet. Ein Objektträger kann dabei mit geeigneten und mittels eines entsprechenden automatisierten Erkennungsverfahrens erkennbaren Bezugspunkten versehen werden, die insbesondere auch eine definierte Lage auf dem Objektträger aufweisen können und dadurch rasch aufgefunden werden können. Entsprechende Bezugspunkte können visuell erkennbar sein, so dass ein Benutzer eine Überprüfung einer korrekten Erkennung dieser Referenzpunkte durch das Lasermikrodissektionssystem vornehmen kann. Referenzpunkte können jedoch auch beispielsweise in Form von für den Betrachter unsichtbaren Fluoreszenzmarkierungen verwendet werden.

Im Rahmen der vorliegenden Erfindung können die Tupel von Koordinatenwerten, die zuvor erläutert wurden, insbesondere Koordinatenpaare sein, die jeweils Positionen der Zielpunkte auf dem Untersuchungsobjekt in der ersten und zweiten Raumrichtung angeben. Die im Rahmen des erfindungsgemäßen Verfahrens bestimmten weiteren Koordinatenwerte in der dritten Raumrichtung können dann jeweils diesen Koordinatenwerten zugeordnet werden. In dieser Verfahrensvariante wird also zunächst ohne eine Vorgabe von Werten in der dritten Raumrichtung gearbeitet; diese werden stattdessen vollständig über das erfindungsgemäße Verfahren definiert.

Alternativ dazu ist es auch möglich, Tupel (Tripel) von Koordinatenwerten zu verwenden, die jeweils auch eine vorgegebene Lage der Zielpunkte auf dem Untersuchungsobjekt in der dritten Raumrichtung angeben. Diese vorgegebene Lage der Zielpunkte kann dabei einen Vorgabewert berücksichtigen, der vorliegen würde, wenn beispielsweise ein entsprechender Objektträger idealerweise vollständig plan in bzw. parallel zu einer Fokusebene angeordnet wäre. Im Rahmen der vorliegenden Erfindung werden dann die vordefinierten Koordinatenwerte jeweils auf Grundlage der bestimmten weiteren Koordinatenwerte korrigiert. Die vorliegende Erfindung ermittelt damit einen "Offset" für entsprechende Vorgabewerte, mit dem die bereits vorhandenen Koordinatenwerte in der Applikatenrichtung beaufschlagt werden.

Grundsätzlich können im Rahmen der vorliegenden Erfindung die Koordinatenwerte kartesische Koordinaten oder Polarkoordinaten in einem Bezugskoordinatensystem definieren. Insbesondere können die Zielpunkte Teil einer Bearbeitungslinie sein, entlang derer das Untersuchungsobjekt mittels des Laserstrahls bearbeitet wird. Insbesondere kann dabei das Bearbeiten des Untersuchungsobjekts mittels des Laserstrahls ein Schneiden des Untersuchungsobjekt umfassen. Wie jedoch bereits zuvor erläutert, kann die vorliegende Erfindung grundsätzlich auch bei nicht schneidenden Lasermikrodissektionsverfahren zum Einsatz kommen, beispielsweise in der eingangs erläuterten Laser Capture Microdissection.

Das erfindungsgemäße Verfahren erweist sich insbesondere dann als vorteilhaft, wenn die Tupel von Koordinaten in einer Untersuchungseinrichtung, beispielsweise einem eingangs erläuterten Slidescanner, ermittelt, und in ein zu bearbeitendes Untersuchungsobjekt mittels des Laserstrahls verwendetes Lasermikrodissektionssystem importiert werden. In das verwendete Lasermikrodissektionssystem wird dabei auch das Untersuchungsobjekt, das zuvor bildgebend erfasst und in der Untersuchungseinrichtung untersucht wurde, eingebracht. Zu weiteren Vorteilen einer entsprechenden Verfahrensvariante sei auf die obigen Erläuterungen ausdrücklich verwiesen.

Die vorliegende Erfindung kann in einem selbst nicht erfindungsgemäßen Lasermikrodissektionssystem umgesetzt werden, das ein mikroskopisches Untersuchungsobjekt unter Verwendung von Tupeln von Koordinatenwerten, die jeweils Positionen von Zielpunkten auf dem Untersuchungsobjekt zumindest in einer ersten Raumrichtung und einer zu der ersten Raumrichtung orthogonalen zweiten Raumrichtung angeben, mittels eines Laserstrahls bearbeitet. Das Lasermikrodissektionssystem ist dafür eingerichtet, Positionen wenigstens dreier Referenzpunkte zumindest jeweils in der ersten und der zweiten Raumrichtung sowie in einer zu der ersten und der zweiten Raumrichtung orthogonalen dritten Raumrichtung vorab zu ermitteln, auf Grundlage der Positionen der Referenzpunkte eine Referenzebene festzulegen, für die Zielpunkte jeweils weitere Koordinatenwerte, die eine erwartete Lage der Zielpunkte auf dem Untersuchungsobjekt in der dritten Raumrichtung angeben, zu bestimmen, die Bestimmung der weiteren Koordinatenwerte in Abhängigkeit von der Position des oder der Referenzpunkte festgelegten Referenzebene vorzunehmen, und eine Fokuslage des Laserstrahls zur Bearbeitung des Untersuchungsobjekts in Abhängigkeit von den bestimmten weiteren Koordinatenwerten einzustellen.

Ein entsprechendes Lasermikrodissektionssystem ist insbesondere zur Durchführung eines Verfahrens eingerichtet, wie es zuvor in unterschiedlichen Ausgestaltungen erläutert wurde, und weist hierzu entsprechend eingerichtete Mittel auf. Zu Ausgestaltung eines entsprechenden Lasermikrodissektionssystems sei auf die diesbezüglichen Patentansprüche ausdrücklich verwiesen. Die zuvor bezüglich des erfindungsgemäßen Verfahrens und seiner Varianten getroffenen Erläuterungen gelten auch für entsprechende Ausgestaltungen eines Lasermikrodissektionssystems und werden daher an dieser Stelle aus Gründen der Übersichtlichkeit halber nicht erneut erläutert.

Die vorliegende Erfindung kann ferner mittels einem selbst nicht erfindungsgemäßen Computerprogramm mit Programmcode zur Durchführung eines Verfahrens, wie es zuvor in Ausgestaltungen erläutert wurde, umgesetzt werden, wenn das Computerprogramm auf einem Prozessor ausgeführt wird.

Der Begriff "und/oder" umfasst im hier verwendeten Sprachgebrauch alle Kombinationen von einem oder mehreren der zugehörigen aufgeführten Elemente und kann mit "/" abgekürzt werden.

Obwohl einige Aspekte im Rahmen einer Vorrichtung beschrieben wurden, ist es klar, dass diese Aspekte auch eine Beschreibung des entsprechenden Verfahrens darstellen, wobei ein Block oder eine Vorrichtung einem Verfahrensschritt oder einer Funktion eines Verfahrensschritts entspricht. Analog dazu stellen Aspekte, die im Rahmen eines Verfahrensschritts beschrieben werden, auch eine Beschreibung eines entsprechenden Blocks oder Elements oder einer Eigenschaft einer entsprechenden Vorrichtung dar. Einige oder alle Verfahrensschritte können durch (oder unter Verwendung) einer Hardwarevorrichtung ausgeführt werden, wie es zum Beispiel ein Prozessor, ein Mikroprozessor, ein programmierbarer Computer oder eine elektronische Schaltung sein kann. In einigen Ausführungsbeispielen können ein oder mehrere der wichtigsten Verfahrensschritte durch eine solche Vorrichtung ausgeführt werden.

Abhängig von bestimmten Implementierungsanforderungen können Ausführungsbeispiele der Erfindung in Hardware oder Software implementiert werden. Die Implementierung kann mit einem nicht-flüchtigen Speichermedium wie einem digitalen Speichermedium, wie beispielsweise einer Diskette, einer DVD, einem Blu-Ray, einer CD, einem ROM, einem PROM und EPROM, einem EEPROM oder einem FLASH-Speicher, durchgeführt werden, auf dem elektronisch lesbare Steuersignale gespeichert sind, die mit einem programmierbaren Computersystem so zusammenwirken (oder zusammenwirken können), dass das jeweilige Verfahren durchgeführt wird. Daher kann das digitale Speichermedium computerlesbar sein.

Einige Ausführungsbeispiele gemäß der Erfindung umfassen einen Datenträger mit elektronisch lesbaren Steuersignalen, die mit einem programmierbaren Computersystem zusammenwirken können, so dass eines der hierin beschriebenen Verfahren durchgeführt wird.

Im Allgemeinen können Ausführungsbeispiele der vorliegenden Erfindung als Computerprogrammprodukt mit einem Programmcode implementiert werden, wobei der Programmcode für die Ausführung eines der Verfahren wirksam ist, wenn das Computerprogrammprodukt auf einem Computer läuft. Der Programmcode kann beispielsweise auf einem maschinenlesbaren Träger gespeichert werden.

Weitere Ausführungsbeispiele umfassen das Computerprogramm zur Durchführung eines der hierin beschriebenen Verfahren, das auf einem maschinenlesbaren Träger gespeichert ist.

Mit anderen Worten, ein Ausführungsbeispiel der vorliegenden Erfindung ist daher ein Computerprogramm mit einem Programmcode zur Durchführung eines der hierin beschriebenen Verfahren, wenn das Computerprogramm auf einem Computer läuft.

Ein weiteres Ausführungsbeispiel der vorliegenden Erfindung ist daher ein Speichermedium (oder ein Datenträger oder ein computerlesbares Medium), das ein darauf gespeichertes Computerprogramm zum Ausführen eines der hierin beschriebenen Verfahren umfasst, wenn es von einem Prozessor ausgeführt wird. Der Datenträger, das digitale Speichermedium oder das aufgezeichnete Medium sind in der Regel greifbar und/oder nicht übergangslos. Ein weiteres Ausführungsbeispiel der vorliegenden Erfindung ist eine Vorrichtung, wie hierin beschrieben, die einen Prozessor und das Speichermedium umfassen.

Ein weiteres Ausführungsbeispiel der Erfindung ist daher ein Datenstrom oder eine Signalfolge, die das Computerprogramm zur Durchführung eines der hierin beschriebenen Verfahren darstellt. Der Datenstrom oder die Signalfolge kann beispielsweise so konfiguriert werden, dass sie über eine Datenkommunikationsverbindung, beispielsweise über das Internet, übertragen werden.

Ein weiteres Ausführungsbeispiel umfasst ein Verarbeitungsmittel, zum Beispiel einen Computer oder eine programmierbare Logikvorrichtung, das konfiguriert oder angepasst ist, um eines der hierin beschriebenen Verfahren auszuführen.

Ein weiteres Ausführungsbeispiel umfasst einen Computer, auf dem das Computerprogramm zum Ausführen eines der hierin beschriebenen Verfahren installiert ist.

Ein weiteres Ausführungsbeispiel gemäß der Erfindung umfasst eine Vorrichtung oder ein System, das konfiguriert ist, um (zum Beispiel elektronisch oder optisch) ein Computerprogramm zum Ausführen eines der hierin beschriebenen Verfahren an einen Empfänger zu übertragen. Der Empfänger kann beispielsweise ein Computer, eine mobile Vorrichtung, eine Speichervorrichtung oder dergleichen sein. Die Vorrichtung oder das System kann beispielsweise einen Dateiserver zum Übertragen des Computerprogramms an den Empfänger umfassen.

In einigen Ausführungsbeispielen kann eine programmierbare logische Vorrichtung (z.B. eine feldprogrammierbare Gatteranordnung, FPGA) verwendet werden, um einige oder alle Funktionalitäten der hierin beschriebenen Verfahren auszuführen. In einigen Ausführungsbeispielen kann eine feldprogrammierbare Gatteranordnung mit einem Mikroprozessor zusammenarbeiten, um eines der hierin beschriebenen Verfahren durchzuführen. Im Allgemeinen werden die Verfahren vorzugsweise von jedem Hardwaregerät durchgeführt.

Die Erfindung wird nachfolgend unter Bezugnahme auf die beigefügten Zeichnungen näher erläutert, welche Ausgestaltungen der vorliegenden Erfindung veranschaulichen.

### Kurze Beschreibung der Zeichnungen

Figur 1 veranschaulicht ein Lasermikrodissektionssystem in vereinfachter schematischer Darstellung.
Figur 2 veranschaulicht die Definition einer Schnittlinie für ein Lasermikrodissektionssystem.
Figur 3 veranschaulicht ein Verfahren gemäß einer Ausgestaltung der vorliegenden Erfindung anhand eines Koordinatensystems.
Figur 4 veranschaulicht ein Verfahren gemäß einer Ausführungsform der Erfindung in Form eines schematischen Ablaufplans.

### Ausführliche Beschreibung

In Figur 1 ist ein Lasermikrodissektionssystem gemäß einer Ausführungsform der vorliegenden Erfindung bzw. ein Lasermikrodissektionssystem, das zur Durchführung eines Verfahrens gemäß einer Ausführungsform der vorliegenden Erfindung eingesetzt werden kann, schematisch dargestellt und insgesamt mit 100 bezeichnet. Das Lasermikrodissektionssystem 100 entspricht in wesentlichen Teilen jenem, das in der EP 1 276 586 B1 offenbart ist.

Ein kartesisches Koordinatensystem, anhand dessen nachfolgend erwähnte Achsen bzw. Richtungen x, y und z veranschaulicht sind, ist in Figur 1 unten rechts dargestellt. In diesem Koordinatensystem verläuft die x-Achse die senkrecht zur Papierebene und die y-Achse und die z-Achse liegen in der Papierebene. Die x-Achse, die y-Achse und die z-Achse stehen jeweils senkrecht bzw. orthogonal zueinander.

Das Lasermikrodissektionssystem 100 umfasst ein Mikroskop 102. In einem Mikroskopfuß 104 des Mikroskops 102 ist im dargestellten Beispiel eine hier nur teilweise veranschaulichte Beleuchtungseinheit 106 vorgesehen sein. Die Beleuchtungseinheit 106 kann beispielsweise eine nicht dargestellte Lichtquelle zur Bereitstellung von Beleuchtungslicht sowie Mittel zur Beeinflussung des Beleuchtungslichts umfassen, beispielsweise Filter und/oder Blenden. Zur Durchlichtbeleuchtung und zur Einstellung geeigneter Kontrast- bzw. Beobachtungsverfahren ist im dargestellten Beispiel eine stark vereinfacht veranschaulichte Kondensoreinheit 108 vorgesehen.

Am Mikroskopfuß 104 kann beispielsweise auch eine Bedienerschnittstelle 110 angeordnet sein, die beispielsweise als Touchscreen ausgebildet sein kann, und über die ein Benutzer beispielsweise Betrachtungs- und/oder Bearbeitungsparameter eingeben und/oder auslesen kann. Das Mikroskop 102 weist einen Triebknopf 112 auf. Dieser dient zur Bedienung eines Grob- und eines Feintriebs zur Einstellung einer Höhe eines Mikroskoptischs 114.

Ein Objekt 116, das sich auf einem Objektträger 118 befindet, der wiederum in einer Halterung 120 aufgenommen ist, beispielsweise ein auf dem Objektträger aufgebrachter Schnitt, kann hierdurch in eine Objektebene eines Objektivs 122 gebracht werden. Das Objektiv 122 ist neben weiteren, nicht gesondert bezeichneten Objektiven in einem Objektivrevolver 124 befestigt. Zum Schutz vor Laserstrahlung kann eine insbesondere transparente Schutzhaube 126 vorgesehen sein.

Von dem Objekt 116 in der abgestrahltes Beobachtungslicht verläuft entlang eines Beobachtungsstrahlengangs 128. In einer Tubuseinheit 130 mit geeigneten Auskoppeleinrichtungen 132 kann ein vorzugsweise variabler Anteil des Beobachtungslichts, beispielsweise um 60°, ausgekoppelt und mittels eines Okularpaars 134 einem Benutzer dargeboten werden. Ein weiterer Anteil des Beobachtungslichts kann in eine digitale Bilderfassungseinheit 136 eingekoppelt und bildgebend erfasst werden. Der Bilderfassungseinheit 136 kann, vor Ort, in einer Steuereinheit 136 oder einem Steuerrechner (siehe unten), oder in anderer räumlicher Anordnung, eine Bildauswerteeinheit 138 zugeordnet sein.

Das Lasermikrodissektionssystem 100 weist eine Lasereinheit 140 mit einer Laserlichtquelle 142 auf. Ein durch die Laserlichtquelle 142, bei der es sich beispielsweise um eine UV-Laserlichtquelle handeln kann, bereitgestellter Laserstrahl 144 wird in einer Auflichteinheit, die hier insgesamt mit 146 angegeben ist, an einem ersten Umlenkspiegel 148 und einem zweiten Umlenkspiegel 150 umgelenkt und durch das Objektiv 122 auf das Objekt 116 fokussiert.

Bei dem hier veranschaulichten Lasermikrodissektionssystem 100 kann der Ort, an dem der Laserstrahl 144 auf das Objekt 116 auftrifft, grundsätzlich auf unterschiedliche Weise eingestellt werden. Einerseits kann eine manuelle Verstelleinrichtung 152 vorgesehen sein, mittels derer der als Kreuztisch ausgebildete Mikroskoptisch 114 in x- und y-Richtung (also hier senkrecht bzw. parallel zur Papierebene) verstellt werden kann. Neben der Verstelleinrichtung 152 können auch elektromechanische Stellmittel vorgesehen sein, die beispielsweise durch die Steuereinheit 138 angesteuert bzw. deren Position durch die Steuereinheit 138 erfasst werden kann.

Die Steuereinheit 138 kann auch beliebige weitere motorisierte Funktionen des Lasermikrodissektionssystems 100 steuern und insbesondere eine Schnittstelle zu einem externen Steuerrechner 160, der über entsprechende drahtlose oder drahtgebundene Verbindungen angebunden sein kann, bereitstellen.

Für die Lasermikrodissektion kann insbesondere eine Laserablenkeinrichtung 154 vorgesehen sein. Mittels der Laserablenkeinrichtung 154 kann der Laserstrahl 144 gegenüber einer zwischen dem ersten Umlenkspiegel 148 und dem zweiten Umlenkspiegel 150 verlaufenden optischen Achse abgelenkt werden. Der Laserstrahl kann daher an unterschiedlichen Positionen auf den zweiten Umlenkspiegel 150 auftreffen, der beispielsweise als dichromatischer Teiler ausgebildet sein kann. Die Anordnung ist dabei insbesondere derart, dass der Laserstrahl 144 durch die hintere Objektivpupille verläuft. Durch eine entsprechende Ablenkung wird der Laserstrahl 144 an unterschiedlichen Positionen auf das Objekt 116 fokussiert. Eine Ablenkung mittels einer Laserablenkeinrichtung 154 der hier gezeigten Art ist im Detail beispielsweise in der EP 1 276 586 B1 gezeigt. Es sei betont, dass hier unterschiedliche Möglichkeiten zur Ablenkung eines Laserstrahls b bzw. zur Positionierung des Objekts 116 in der gegenüber dem Laserstrahl 144 zum Einsatz kommen können. Die Erfindung ist nicht auf das dargestellte Beispiel beschränkt.

Im dargestellten Beispiel weist die Laserablenkeinrichtung 154 zwei massive gläserne Keilplatten 156 auf, die gegen die optische Achse geneigt und unabhängig voneinander um diese drehbar sind. Hierzu sind die Keilplatten 156 mit nicht gesondert bezeichneten Kugellagern gelagert. Jede der Keilplatten ist mit einem ebenfalls nicht gesondert bezeichneten Zahnrad verbunden. Das Zahnrad kann jeweils mittels eines Aktors gedreht werden, der mit einem entsprechenden Ansteuersignal beaufschlagt werden kann Die Aktoren können über Positonsgeber verfügen und eine durch diese erfasste Position kann an die Steuereinheit 138 übermittelt werden.

Eine Fokussierung des über den Beobachtungsstrahlengang 128 erfassten mikroskopischen Bilds und des Laserstrahls 144 erfolgt einerseits durch ein Anheben bzw. Absenken des Mikroskoptischs 114, wobei ein Abgleich der Fokuslagen des Mikroskopobjektivs 122 und des Laserstrahls 144 vorgenommen wird. Hierbei kann beispielsweise in der Steuereinheit und/oder in dem Steuerrechner 152 eine Bildauswertung des über den Beobachtungsstrahlengang 128 erfassten mikroskopischen Bilds vorgenommen werden. Durch eine motorische Ansteuerung des Mikroskoptischs 114 wird hierdurch ein Autofokussystem implementiert, das nochmals gesondert mit 190 veranschaulicht ist.

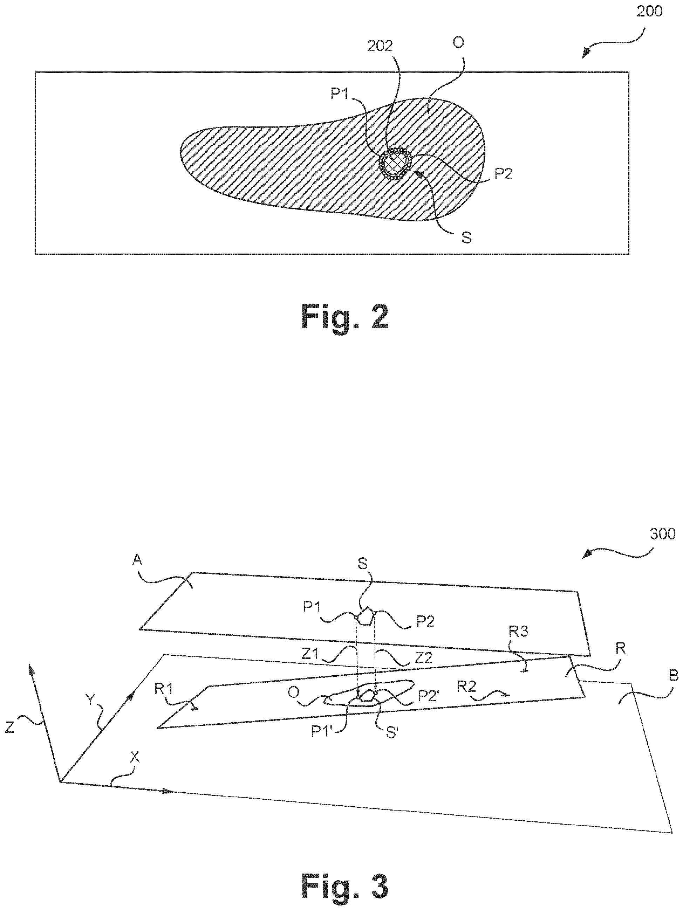

In Figur 2 ist eine Definition von Schnittlinien für ein Lasermikrodissektionssystem, beispielsweise des Lasermikrodissektionssystems gemäß Figur 1, schematisch veranschaulicht. Hierbei ist insgesamt ein Objektträger 200 dargestellt, auf dem ein Untersuchungsobjekt O angeordnet ist. Das Untersuchungsobjekt O kann grundsätzlich in beliebiger Weise ausgebildet sein. Das Untersuchungsobjekt O kann auch auf einem auf dem Objektträger 200 angeordneten Film bzw. einer entsprechenden Membran angeordnet oder hiervon überdeckt sein.

Das Untersuchungsobjekt O weist eine interessierende Zelle bzw. einen entsprechenden Zellbereich auf, die bzw. der hier insgesamt mit 202 veranschaulicht ist. Die Zelle bzw. der Zellbereich 202 soll einer Untersuchung durch Lasermikrodissektion zugeführt werden. Hierzu soll im dargestellten Beispiel eine Schnittlinie um die Zelle bzw. den Bereich 202 herumgeführt werden. Es sei jedoch nochmals betont, dass sich die vorliegende Erfindung auch für nicht schneidende Lasermikrodissektionsverfahren eignet.

Die Schnittlinie ist hier insgesamt mit S bezeichnet. Sie besteht aus einer Reihe von hier stark vergrößert veranschaulichten Zielpunkten, von denen in Figur 2 und in der nachfolgenden Figur 3 lediglich zwei beliebige Zielpunkte P1, P2 spezifisch bezeichnet sind. Die Zielpunkte sind stark vergrößert dargestellt. Durch eine Aneinanderreihung entsprechender Zielpunkte P1, P2 ergibt sich die Schnittlinie S.

Weitere Varianten beispielsweise solche Varianten, in denen ein Steg verbleibt, der anschließend mittels eines gezielten Laserpulses durchtrennt wird, können im Rahmen der vorliegenden Erfindung ebenfalls vorgesehen sein und werden jedoch hier der Übersichtlichkeit halber nicht betrachtet.

Durch eine Relativbewegung des Laserstrahl des Lasermikrodissektionssystems, beispielsweise des Lasermikrodissektionssystems 100 gemäß Figur 1, können jeweils die Zielpunkte P1, P2 eingestellt und ein oder mehrere Laserimpulse appliziert werden. Das Lasermirodissektionssystem fährt sukzessive die Zielpunkte P1, P2 an und schneidet daher auf diese Weise den Bereich 202 entlang der Schnittlinie S aus.

In Figur 3 ist ein Verfahren gemäß einer Ausgestaltung der vorliegenden Erfindung anhand eines Koordinatensystems mit darin angeordneten Ebenen schematisch veranschaulicht und insgesamt mit 300 bezeichnet. Das Koordinatensystem mit den Koordinatenachsen X, Y und Z kann dabei insbesondere dem Koordinatensystem mit den Koordinatenachsen x, y und z entsprechen, das in Figur 1 veranschaulicht ist. Während in Figur 1 dabei die Koordinatenachsen y und z in der Papierebene liegen und die Koordinatenachse x senkrecht dazu steht, sind sämtliche Koordinatenachsen gemäß Figur 3 perspektivisch im Raum dargestellt.

Durch die Koordinatenachsen X und Y wird eine Bezugsebene B bzw. eine entsprechende Grundebene aufgespannt, die einer Ebene entspricht, die senkrecht zu einer optischen Achse eines Mikroskopobjektivs, beispielsweise des Mikroskopobjektivs 122 des Lasermikrodissektionssystems 100 gemäß Figur 1, steht. Idealerweise wäre ein Objektträger, beispielsweise der Objektträger 200 gemäß Figur 2, in oder parallel zu dieser Grundebene angeordnet. Aufgrund einer unvermeidlichen Schiefstellung des Objektträgers, beispielsweise des Objektträgers 200, kommt es jedoch in der Praxis hierzu nicht.

Parallel zu der Grundebene B ist eine Ebene A veranschaulicht, die insbesondere einer Arbeitsebene entsprechen kann, in welcher, beispielsweise in einem Slidescanner, eine Vorgabe einer Schnittlinie S erfolgt. Die Schnittlinie mit den Zielpunkte P1, P2 ist hier nochmals vereinfacht dargestellt. Wie bereits erläutert, ergibt sich eine entsprechende Schnittlinie S typischerweise durch eine Aneinanderreihung einer Vielzahl von Zielpunkten P1, P2. Die Arbeitsebene A kann auch der Bezugsebene entsprechen. Bei einer ideal parallelen Anordnung des Objektträgers mit dem Untersuchungsobjekt O würde eine Oberfläche des Untersuchungsobjekts O in der Arbeitsebene bzw. exakt parallel hierzu liegen. Die Arbeitsebene kann, wie erwähnt auch in der Grundebene angeordnet sein, bzw. in derselben Ebene liegen.

Im Rahmen der vorliegenden Erfindung ist nun vorgesehen, eine Referenzebene R zu ermitteln. Diese Referenzebene R soll die real vorliegende Schräglage des Untersuchungsobjekts O bzw. eines entsprechenden Trägers abbilden. Die Referenzebene R kann damit insbesondere auch einer Ebene entsprechen, in der das Untersuchungsobjekt O bzw. ein das Untersuchungsobjekt tragender Objektträger, wie beispielsweise der Objektträger 200 gemäß Figur 2, liegt. Die Referenzebene R ist hier übertrieben schiefgestellt veranschaulicht. In der Praxis ergeben sich typischerweise deutlich geringere, jedoch die Fokuslage negativ beeinflussende Abweichungen.

Im Rahmen der vorliegenden Erfindung ist nun vorgesehen, eine entsprechende Referenzebene R durch mindestens drei Referenzpunkte R1, R2 und R3 zu definieren. Wie bereits zuvor angesprochen, wird dabei im Rahmen der vorliegenden Erfindung und gemäß der hier veranschaulichten Ausgestaltung eine Position wenigstens dreier Referenzpunkte jeweils in der ersten und der zweiten Raumrichtung X, Y sowie in einer zu der ersten und zweiten Raumrichtung X, Y orthogonalen dritten Raumrichtung Z vorab ermittelt. Wie bereits erläutert, kann es sich bei den Referenzpunkten R1, R2, R3 auch um Probenpunkte handeln, die dann auf dem Untersuchungsobjekt O angeordnet sind, oder um gezielt auf einen entsprechenden Objektträger, beispielsweise der Objektträger 200 gemäß Figur 2, angebrachte Markierungen. Die realen Lagen der durch die Vorgabezielpunkte P1, P2 definierten Positionen auf dem Untersuchungsobjekt O sind hiermit P1' und P2' bezeichnet. Entsprechend ist eine hierdurch definierte reale Schnittlinie auf dem Untersuchungsobjekt O mit S' bezeichnet.

In der hier dargestellten Ausgestaltung der vorliegenden Erfindung werden nun die weiteren Koordinatenwerte, die hier mit Z1 und Z2 bezeichnet sind, in Abhängigkeit von der festgelegten Referenzebene R dadurch bestimmt, dass eine Lage der festgelegten Referenzebene in der dritten Raumrichtung Z an einer Position bestimmt wird, die durch die jeweiligen Zielpunkte P1, P2 durch ein zugehöriges Tupel von Koordinatenwerten in der ersten und der zweiten Raumrichtung X, Y angegeben wird. Wie in Form gestrichelter Pfeile veranschaulicht, erfolgt also eine Projektion der Zielpunkte P1, P2 auf die Referenzebene R.

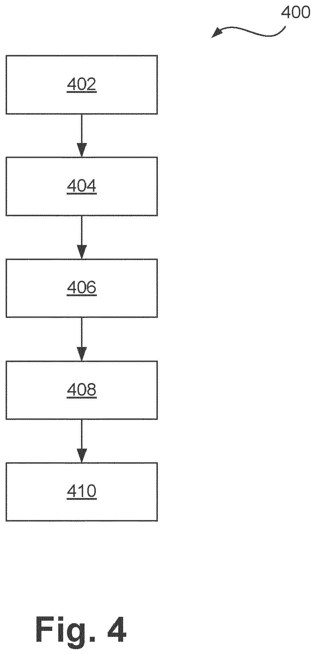

In Figur 4 ist ein Verfahren gemäß einer Ausgestaltung der vorliegenden Erfindung nochmals in Form eines stark vereinfachten, schematisierten Ablaufplans veranschaulicht. Das Verfahren ist insgesamt mit 400 bezeichnet.

In einem Schritt 402 erfolgt dabei eine Definition von Zielpunkten auf einem Untersuchungsobjekt, zumindest in einer ersten Raumrichtung und in einer zu der ersten Raumrichtung orthogonalen Raumrichtung. Der Schritt 402 kann insbesondere anhand von Bilddaten durchgeführt werden, die beispielsweise in einem separat zu einem Lasermikrodissektionssystem bereitgestellten Slidescanner erhalten werden.

In einem Schritt 404 können entsprechende Daten in ein Lasermikrodissektionssystem übertragen werden. Entsprechend wird auch das Untersuchungsobjekt bzw. ein das Objektträger in das Lasermikrodissektionssystem verbracht.

In einem Schritt 406 werden nun Positionen wenigstens dreier Referenzpunkte in der ersten und der zweiten Raumrichtung sowie in einer zu der ersten und zweiten Raumrichtung orthogonalen dritten Raumrichtung ermittelt. Dies kann, wie erwähnt, anhand vorgegebener bzw. auf einem Objektträger bereitgestellten Referenzpunkte oder anhand von einer Probe bzw. eines Untersuchungsobjekts O erfolgen.

In einem Schritt 408 werden dann für die Zielpunkte jeweils weitere Koordinatenwerte bestimmt, die eine erwartete Lage der Zielpunkte auf dem Untersuchungsobjekt in der dritten Raumrichtung angegeben. Bestimmung der weiteren Koordinatenwerte erfolgt dabei in Abhängigkeit von der festgelegten Referenzebene.

In einem sich anschließenden Schritt 410 wird nun eine Fokuslage des Laserstrahls zur Bearbeitungs- und Untersuchungsobjekts in Abhängigkeit von den bestimmten weiteren Koordinatenwerten eingestellt und die Probe entsprechend bearbeitet.

### Bezugszeichenliste

- 100: Lasermikrodissektionssystem
- 102: Mikroskop
- 104: Mikroskopfuß
- 106: Beleuchtungseinheit
- 108: Kondensoreinheit
- 110: Bedienerschnittstelle
- 112: Triebknopf
- 114: Mikroskoptisch
- 116: Untersuchungsobjekt
- 118: Objektträger
- 120: Halterung
- 122: Objektiv
- 124: Objektivrevolver
- 126: Schutzhaube
- 128: Beobachtungsstrahlengang
- 130: Tubuseinheit
- 132: Auskoppeleinrichtung
- 134: Okularpaar
- 136: Bilderfassungseinheit
- 138: Bildauswerteeinheit
- 140: Lasereinheit
- 142: Laserlichtquelle
- 144: Laserstrahl
- 146: Auflichteinheit
- 148: Umlenkspiegel
- 150: Umlenkspiegel
- 152: Verstelleinrichtung
- 160: Steuerrechner
- 154: Laserablenkeinrichtung
- 156: Keilplatten
- 190: Autofokussystem
- x: Koordinatenachse, Raumrichtung
- y: Koordinatenachse, Raumrichtung
- z: Koordinatenachse, Raumrichtung

- 200: Objektträger
- O: Untersuchungsobjekt
- 202: Interessierender Bereich
- S: Schnittlinie
- P1: Zielpunkt
- P2: Zielpunkt
- B: Bezugsebene
- A: Arbeitsebene
- R: Referenzebene
- R1: Referenzpunkt
- R2: Referenzpunkt
- R3: Referenzpunkt
- P1': Reale Position Zielpunkt
- P2': Reale Position Zielpunkt
- S': Reale Position der Schnittlinie
- Z1: Weiterer Koordinatenwert
- Z2: Weiterer Koordinatenwert
- X: Koordinatenachse, Raumrichtung
- Y: Koordinatenachse, Raumrichtung
- Z: Koordinatenachse, Raumrichtung
- 400: Verfahren
- 402: Definition von Zielpunkten
- 404: Übertragung von Daten in Lasermikrodissektionssystem
- 406: Ermitteln von Referenzpunktpositionen
- 408: Bestimmung weiterer Koordinatenwerte
- 410: Einstellung Fokuslage

## Patentansprüche

1. Verfahren (400) zur Lasermikrodissektion, bei dem ein mikroskopisches Untersuchungsobjekt (O) unter Verwendung von Tupeln von Koordinatenwerten, die jeweils Positionen von Zielpunkten (P1, P2) auf dem Untersuchungsobjekt (O) zumindest in einer ersten Raumrichtung (X) und einer zu der ersten Raumrichtung orthogonalen zweiten Raumrichtung (Y) angeben, mittels eines Laserstrahls (144) bearbeitet wird, **dadurch gekennzeichnet, dass** Positionen wenigstens dreier Referenzpunkte (R1, R2, R3) jeweils in der ersten und der zweiten Raumrichtung (X, Y) sowie in einer zu der ersten und der zweiten Raumrichtung (X, Y) orthogonalen dritten Raumrichtung (Z) vorab ermittelt werden, wobei die erste und zweite Raumrichtung (X, Y) senkrecht zu einer Objektivachse eines in dem Verfahren (400) verwendeten Lasermikrodissektionssystems sind, dass auf Grundlage der Positionen der Referenzpunkte (R1, R2, R3) eine Referenzebene (R) festgelegt wird, die zumindest teilweise einer Ebene entspricht, in der eine Oberfläche des Untersuchungsobjekts (O) angeordnet ist, dass für die Zielpunkte (P1, P2) jeweils weitere Koordinatenwerte bestimmt werden, die eine erwartete Lage (Z1, Z2) der Zielpunkte (P1, P2) auf dem Untersuchungsobjekt (O) in der dritten Raumrichtung angeben, dass die Bestimmung der weiteren Koordinatenwerte in Abhängigkeit von der festgelegten Referenzebene (R) vorgenommen wird, und dass eine Fokuslage des Laserstrahls (144) zur Bearbeitung des Untersuchungsobjekts (O) in Abhängigkeit von den bestimmten weiteren Koordinatenwerten eingestellt wird.

2. Verfahren (400) nach Anspruch 1, bei dem die Bestimmung der weiteren Koordinatenwerte in Abhängigkeit von der festgelegten Referenzebene (R) jeweils umfasst, eine Lage der festgelegten Referenzebene (R) in der dritten Raumrichtung (Z) an einer Position zu bestimmen, die für die jeweiligen Zielpunkte (P1, P2) durch das zugehörige Tupel von Koordinatenwerten in der ersten und der zweiten Raumrichtung (X, Y) angegeben wird.

3. Verfahren (400) nach einem der vorstehenden Ansprüche, bei dem ein Autofokussystem (190) verwendet wird, das zunächst auf einen Voreinstellwert voreingestellt wird und das anschließend auf Grundlage von Merkmalen des Untersuchungsobjekts (O) eine Autofokusroutine durchführt, wobei der Voreinstellwert in Abhängigkeit von einer Lage der Referenzebene (R) in der dritten Raumrichtung (Z) vorgegeben wird.

4. Verfahren (400) nach einem der vorstehenden Ansprüche, bei dem zumindest einer der Referenzpunkte (R1, R2, R3) innerhalb oder außerhalb eines Bereichs liegt, in dem sich das Untersuchungsobjekt (O) befindet.

5. Verfahren (400) nach Anspruch 4, bei dem die Referenzpunkte (R1, R2, R3) Markierungen auf einem Objektträger, auf dem sich das Untersuchungsobjekt (O) befindet, oder Objektmerkmalen entsprechen.

6. Verfahren (400) nach einem der vorstehenden Ansprüche, bei dem die Tupel von Koordinatenwerten Koordinatenpaare sind, die jeweils die Positionen der Zielpunkte (P1, P2) auf dem Untersuchungsobjekt (O) in der ersten und der zweiten Raumrichtung (X, Y) angeben, und bei dem die bestimmten weiteren Koordinatenwerte jeweils den Koordinatenpaaren zugeordnet werden.

7. Verfahren (400) nach einem der Ansprüche 1 bis 5, bei dem die Tupel von Koordinatenwerten vordefinierte Koordinatenwerte umfassen, die jeweils eine vorgegebene Lage der Zielpunkte (P1, P2) auf dem Untersuchungsobjekt (O) in der dritten Raumrichtung (Z) angeben, und bei dem die vordefinierten Koordinatenwerte jeweils auf Grundlage der bestimmten weiteren Koordinatenwerte (Z1, Z2) korrigiert werden.

8. Verfahren (400) nach einem der vorstehenden Ansprüche, bei dem die Koordinatenwerte kartesische Koordinaten oder Polarkoordinaten in einem Bezugskoordinatensystem definieren.

9. Verfahren (400) nach einem der vorstehenden Ansprüche, bei dem die Zielpunkte (P1, P2) Teil einer Bearbeitungslinie (S) sind, entlang derer das Untersuchungsobjekt (O) mittels des Laserstrahls (144) bearbeitet wird.

10. Verfahren (400) nach einem der vorstehenden Ansprüche, bei dem das Bearbeiten des Untersuchungsobjekt (O) mittels des Laserstrahls (144) ein Schneiden des Untersuchungsobjekts (O) umfasst.

11. Verfahren (400) nach einem der vorstehenden Ansprüche, bei dem die Tupel von Koordinatenwerten in einer Untersuchungseinrichtung (110) ermittelt und in ein zum Bearbeiten des Untersuchungsobjekts (O) mittels des Laserstrahls (144) verwendetes Lasermikrodissektionssystem (100) importiert werden.

## Claims

1. Method (400) of laser microdissection, in which a microscopic examination object (O) is processed by means of a laser beam (144) using tuples of coordinate values which each specify positions of target points (P1, P2) on the examination object (O), at least in a first spatial direction (X) and a second spatial direction (Y) orthogonal to the first spatial direction, **characterized in that** positions of at least three reference points (R1, R2, R3) are determined in advance, in each case in the first and the second spatial direction (X, Y) and in a third spatial direction (Z) orthogonal to the first and the second spatial direction (X, Y), with the first and the second spatial direction (X, Y) being perpendicular to an objective axis of a laser microdissection system used in the method (400), **in that** the positions of the reference points (R1, R2, R3) are used to define a reference plane (R) which corresponds at least in part to a plane in which a surface of the examination object (O) is arranged, **in that** respective further coordinate values specifying an expected location (Z1, Z2) of the target points (P1, P2) on the examination object (O) in the third spatial direction are determined for the target points (P1, P2), **in that** the further coordinate values are determined on the basis of the defined reference plane (R), and **in that** a focal location of the laser beam (144) for processing the examination object (O) is set depending on the determined further coordinate values.

2. Method (400) according to Claim 1, wherein the determination of the further coordinate values on the basis of the defined reference plane (R) in each case comprises the determination of a location of the defined reference plane (R) in the third spatial direction (Z) at a position which is specified for the respective target points (P1, P2) by the associated tuple of coordinate values in the first and the second spatial direction (X, Y).

3. Method (400) according to either of the preceding claims, wherein use is made of an autofocus system (190) which is initially preset to a preset value and subsequently performs an autofocus routine on the basis of features of the examination object (O), the preset value being specified on the basis of a location of the reference plane (R) in the third spatial direction (Z).

4. Method (400) according to any of the preceding claims, wherein at least one of the reference points (R1, R2, R3) is located within or outside of a region in which the examination object (O) is situated.

5. Method (400) according to Claim 4, wherein the reference points (R1, R2, R3) correspond to markers on a slide, on which the examination object (O) is situated, or to object features.

6. Method (400) according to any of the preceding claims, wherein the tuples of coordinate values are coordinate pairs which each specify the positions of the target points (P1, P2) on the examination object (O) in the first and the second spatial direction (X, Y) and wherein the determined further coordinate values are in each case assigned to the coordinate pairs.

7. Method (400) according to any of Claims 1 to 5, wherein the tuples of coordinate values comprise predefined coordinate values which each specify a predetermined location of the target points (P1, P2) on the examination object (O) in the third spatial direction (Z) and wherein the predefined coordinate values are in each case corrected on the basis of the determined further coordinate values (Z1, Z2).

8. Method (400) according to any of the preceding claims, wherein the coordinate values define Cartesian coordinates or polar coordinates in a reference coordinate system.

9. Method (400) according to any of the preceding claims, wherein the target points (P1, P2) are part of a processing line (S), along which the examination object (O) is processed by means of the laser beam (144).

10. Method (400) according to any of the preceding claims, wherein the processing of the examination object (O) by means of the laser beam (144) comprises a cutting of the examination object (O).

11. Method (400) according to any of the preceding claims, wherein the tuples of coordinate values are determined in an examination device (110) and imported into a laser microdissection system (100) that is used for processing the examination object (O) by means of the laser beam (144).

## Revendications

1. Procédé (400) de microdissection laser, dans lequel un objet à examiner (0) microscopique est traité au moyen d'un faisceau laser (144) en utilisant des tuples de valeurs de coordonnées qui indiquent respectivement des positions de points cibles (P1, P2) sur l'objet à examiner (O) au moins dans une première direction spatiale (X) et dans une deuxième direction spatiale (Y) orthogonale à la première direction spatiale,
**caractérisé en ce que** les positions d'au moins trois points de référence (R1, R2, R3) sont établies préalablement respectivement dans la première et dans la deuxième direction spatiale (X, Y) ainsi que dans une troisième direction spatiale (Z) orthogonale à la première et la deuxième direction spatiale (X, Y), dans lequel la première et la deuxième direction spatiale (X, Y) sont perpendiculaires à un axe d'objectif d'un système de microdissection laser utilisé dans le procédé (400), dans lequel sur la base des positions des points de référence (R1, R2, R3), un plan de référence (R) est défini qui correspond au moins partiellement à un plan dans lequel est disposée une surface de l'objet à examiner (0), dans lequel pour les points cibles (P1, P2), respectivement des valeurs de coordonnées supplémentaires sont déterminées qui indiquent un emplacement attendu (Z1, Z2) des points cibles (P1, P2) sur l'objet à examiner (O) dans la troisième direction spatiale, dans lequel la détermination des valeurs de coordonnées supplémentaires est effectuée en fonction du plan de référence défini (R), et dans lequel une position focale du faisceau laser (144) pour le traitement de l'objet à examiner (O) est réglée en fonction des valeurs de coordonnées supplémentaires déterminées.

2. Procédé (400) selon la revendication 1, dans lequel la détermination des valeurs de coordonnées supplémentaires en fonction du plan de référence défini (R) comprend respectivement la détermination d'un emplacement du plan de référence défini (R) dans la troisième direction spatiale (Z) dans une position qui est indiquée pour les points cibles (P1, P2) respectifs par le tuple associé de valeurs de coordonnées dans la première et la deuxième direction spatiale (X, Y).

3. Procédé (400) selon l'une quelconque des revendications précédentes, dans lequel un système de mise au point automatique (190) est utilisé qui est d'abord préréglé sur une valeur de préréglage et qui effectue ensuite sur la base des particularités de l'objet à examiner (O) une routine de mise au point automatique, dans lequel la valeur de préréglage est prédéfinie en fonction d'un emplacement du plan de référence (R) dans la troisième direction spatiale (Z).

4. Procédé (400) selon l'une quelconque des revendications précédentes, dans lequel au moins l'un des points de référence (R1, R2, R3) est situé à l'intérieur ou à l'extérieur d'une zone dans laquelle se trouve l'objet à examiner (O).

5. Procédé (400) selon la revendication 4, dans lequel les points de référence (R1, R2, R3) correspondent à des repères sur un porte-objet sur lequel se trouve l'objet à examiner (0) ou à des particularités de l'objet.

6. Procédé (400) selon l'une quelconque des revendications précédentes, dans lequel les tuples de valeurs de coordonnées sont des paires de coordonnées qui indiquent respectivement les positions des points cibles (P1, P2) sur l'objet à examiner (O) dans la première et la deuxième direction spatiale (X, Y), et dans lequel les valeurs de coordonnées supplémentaires déterminées sont respectivement associées aux paires de coordonnées.

7. Procédé (400) selon l'une quelconque des revendications 1 à 5, dans lequel les tuples de valeurs de coordonnées comprennent des valeurs de coordonnées prédéfinies qui indiquent respectivement un emplacement prédéfini des points cibles (P1, P2) sur l'objet à examiner (O) dans la troisième direction spatiale (Z), et dans lequel les valeurs de coordonnées prédéfinies sont corrigées respectivement sur la base des valeurs de coordonnées supplémentaires (Z1, Z2) déterminées.

8. Procédé (400) selon l'une quelconque des revendications précédentes, dans lequel les valeurs de coordonnées définissent des coordonnées cartésiennes ou des coordonnées polaires dans un système de coordonnés de référence.

9. Procédé (400) selon l'une quelconque des revendications précédentes, dans lequel les points cibles (P1, P2) font partie d'une ligne de traitement (S) le long de laquelle l'objet à examiner (O) est traité au moyen du faisceau laser (144).

10. Procédé (400) selon l'une quelconque des revendications précédentes, dans lequel le traitement de l'objet à examiner (O) au moyen du faisceau laser (144) comprend un découpage de l'objet à examiner (O).

11. Procédé (400) selon l'une quelconque des revendications précédentes, dans lequel les tuples de valeurs de coordonnées sont établies dans un dispositif d'examen (110) et sont importés dans un système de microdissection laser (100) utilisé pour le traitement de l'objet à examiner (O) au moyen du faisceau laser (144) .
